(19) Europäisches Patentamt
European Patent Office
Office européen des brevets

(11) EP 1 042 374 B1

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(21) Anmeldenummer: **98962425.9**

(22) Anmeldetag: **08.12.1998**

(51) Int Cl.$^7$: **C08F 8/00**

(86) Internationale Anmeldenummer:
**PCT/EP98/07978**

(87) Internationale Veröffentlichungsnummer:
**WO 99/032526 (01.07.1999 Gazette 1999/26)**

(54) **VERFAHREN ZUR HYDRIERUNG AROMATISCHER POLYMERE**

METHOD FOR HYDROGENATING AROMATIC POLYMERS

PROCEDE D'HYDROGENATION DE POLYMERES AROMATIQUES

(84) Benannte Vertragsstaaten:
**BE DE FR GB IT NL**

(30) Priorität: **18.12.1997 DE 19756369**

(43) Veröffentlichungstag der Anmeldung:
**11.10.2000 Patentblatt 2000/41**

(73) Patentinhaber:
- **BAYER AG**
  **51368 Leverkusen (DE)**
- **TEIJIN LIMITED**
  **Osaka-shi Osaka 541-0054 (JP)**

(72) Erfinder:
- **WEGE, Volker**
  **D-47799 Krefeld (DE)**
- **RECHNER, Johann**
  **D-47906 Kempen (DE)**

(56) Entgegenhaltungen:
**WO-A-96/34896**

- **DATABASE STN INTERNATIONAL, File CAPLUS, CAPLUS accession no. 1991:560097 Document no. 115:160097, SABATA, STANISLAV ET AL.: "Catalytic hydrogenation of unsaturated polymers" XP002900414 & CS 268 208 B (SABATA ET AL.)**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 042 374 B1

Printed by Jouve, 75001 PARIS (FR)

## Beschreibung

Gegenstand der vorliegenden Erfindung ist ein Verfahren zur Hydrierung aromatischer Polymere, welches dadurch gekennzeichnet ist, daß als Lösungsmittel ein Ether verwendet wird, der kein α-Wasserstoff-Atom an einem zur Etherfunktion benachbarten Kohlenstoffatom aufweist oder ein Gemisch von Lösungsmitteln enthaltend diesen Ether und für Hydrierreaktionen übliche Lösungsmittel.

Die Hydrierung aromatischer Polymere ist bereits bekannt. DE-AS 1 131 885 beschreibt die Hydrierung von Polystyrol in Gegenwart von Katalysatoren und Lösungsmittel. Als Lösungsmittel werden aliphatische und cycloaliphatische Kohlenwasserstoffe, Ether, Alkohole und aromatische Kohlenwasserstoff allgemein erwähnt. Als bevorzugt wird ein Gemisch aus Cyclohexan und Tetrahydrofuran genannt.

WO 96/34 896 (= US-A-5 612 422) beschreibt beispielsweise ein Verfahren zur Hydrierung aromatischer Polymere, bei dem in Gegenwart eines mit Siliciumdioxid unterstütztem Metall als Hydrierungskatalysator mit bestimmter Porengrößenverteilung des Siliciumdioxids hydriert wird. Als Lösungsmittel werden aliphatische oder cycloaliphatische Kohlenwasserstoffe erwähnt. Als Ether werden Diethylenglykoldimethylether und Tetrahydrofuran genannt.

EP-A-322 731 buschreibt die Herstellung von vorwiegend syndiotaktischen kristallinen Polymeren auf Basis von Vinylcyclohexan, wobei ein Styrol-basierendes Polymer in Gegenwart von Hydrierungskatalysatoren und Lösungsmitteln hydriert wird. Als Lösungsmittel werden cycloaliphatische und aromatische Kohlenwasserstoffe. nicht jedoch Ether, erwähnt.

In keiner der genannten Schriften werden die oben beschriebenen Ether als Lösungsmittel erwähnt.

Die in den oben genannten Schriften beschriebenen Ether können an der Luft Peroxide bilden und sind für einen technischen Prozeß schwer beherrschbare Lösungsmittel. Bei einer Anwendung dieser Ether in der Technik zur Hydrierung aromatischer Polymere wären komplexe Inertisierungsmaßnahmen notwendig um Luft von diesen Lösungsmitteln fernzuhalten. Die Ether müssen zudem ausreichend hohe Zündtemperaturen aufweisen, da bei der Polymeraufarbeitung in der Kegel ein Kontakt zu heißen Metalloberflächen in möglicher Gegenwart von Luft eintritt.

Reine Kohlenwasserstoffe als Lösungsmittel haben den Nachteil insbesondere in Verbindung mit Nickelkatalysatoren bei hohen Polymerkonzentrationen hohe Reaktionstemperaturen (>160°C) und hohe Drücke zur vollständigen Hydrierung von Polystyrol zu erfordern (Beispiele 1, 2). Die Temperaturen sind notwendig um das Voranschreiten der Hydrierreaktion bis zum vollständigen Umsatz in überschaubaren Reaktionszeiten zu beschleunigen, dabei findet Molekulargewichtsabbau statt. Der Abbau wird an einer Verringerung der Molekulargewichte Mn und Mw insbesondere der Reduktion von Mw beobachtet.

Das Ausmaß des Molekulargewichtabbaus der vollständig hydrierten Produkte ist für Nickelkatalysatoren bei diesen Lösungsmitteln bei hoher Polymerkonzentration abhängig von z.B. Druck und Temperatur. Der Molekulargewichtsabbau führt zu einem Verlust der mechanischen Eigenschaften des hydrierten Polystyrols. Die Sprödigkeit eines weitgehend abgebauten Materials schließt eine technische Anwendung praktisch aus.

Es wurde nun gefunden, daß bei Verwendung von Ethern, welche kein α-Wasserstoff-Atom an einem zur Etherfunktion benachbarten Kohlenstoffatom aufweisen, als Lösungsmittel oder als Lösungsmittelgemisch mit anderen für Hydrierreaktionen geeignete Lösungsmittel die Hydrierung von aromatischen Polymeren deutlich verbessert wird. Das Verfahren zeichnet sich dadurch aus, daß insbesondere bei hohen Polymer-Konzentrationen kein nennenswerter Abbau des Endproduktes eintritt und keine Peroxidbildung stattfindet. Weiterhin ist eine Aktivitätssteigerung des Katalysators zu beobachten, welche sich durch niedrigere Reaktionstemperaturen bei kürzeren Reaktionszeiten zur vollständigen Hydrierung bemerkbar macht (Beispiel 3). Die Zugabe dieser Ether läßt höhere Polymer/Katalysatorverhältnisse zur vollständigen Hydrierung zu als die Verwendung rein aliphatische Systeme. Die Reaktionen können unter identischen Bedingungen bei niedrigeren Drücken zur vollständigen Hydrierung durchgeführt werden.

Gegenstand der Erfindung ist ein Verfahren zur Hydrierung aromatischer Polymere, in Gegenwart von Katalysatoren, wobei als Lösungsmittel ein Ether, welcher kein α-Wasserstoff-Atom an einem zur Etherfunktion benachbarten Kohlenstoffatom besitzt, oder ein Gemisch solcher Ether oder ein Gemisch mindestens eines der genannten Ether mit für Hydrierreaktionen geeigneten Lösungsmitteln.

Die Reaktion wird im allgemeinen bei Volumenkonzentrationen der Ether-Komponente zum gesamten Lösungsmittels von 0,1 % bis 100 %, vorzugweise 1 % bis 60% ganz besonders bevorzugt 5 % bis 50 %, durchgeführt. Die Etherkomponente kann als ein Cokatalysator bezeichnet werden.

Das erfindungsgemäße Verfahren führt im allgemeinen zu einer praktisch vollständigen Hydrierung der aromatischen Einheiten. In der Regel ist der Hydriergrad ≥80 %, vorzugsweise ≥90 %, ganz besonders bevorzugt ≥99 %, insbesondere 99,5 bis 100 %. Der Hydriergrad läßt sich beispielsweise durch NMR- oder UV-Spektroskopie bestimmen.

Als Ausgangsstoffe werden aromatische Polymere eingesetzt, welche beispielsweise ausgewählt sind aus gegebenenfalls im Phenylring oder an der Vinylgruppe substituiertem Polystyrol oder Copolymere davon mit Monomeren, ausgewählt aus der Gruppe der Olefine, (Meth)acrylate oder Gemische davon. Weitere geeignete Polymere sind aromatische Polyether insbesondere Polyphenylenoxid, aromatische Polycarbonate, aromatische Polyester, aromatische Polyamide, Polyphenylene, Polyxylylene, Polyphenylenvinylene, Polyphenylenethylene, Polyphenylensulfide, Polyaryletherketone, aromatische Polysulfone, aromatische Polyethersulfone, aromatische Polyimide sowie deren Mischungen, Copolymere, gegebenenfalls Copolymere mit aliphatischen Verbindungen.

Als Substituenten im Phenylring kommen $C_1$-$C_4$-Alkyl, wie Methyl, Ethyl, $C_1$-$C_4$-Alkoxy, wie Methoxy, Ethoxy, ankondensierte Aromaten die über ein Kohlenstoffatom oder zwei Kohlenstoffatome mit dem Phenylring verbunden sind mit Phenyl, Biphenyl, Naphthyl in Frage.

Als Substituenten an der Vinylgruppe kommen $C_1$-$C_4$-Alkyl, wie Methyl, Ethyl, n-oder iso-Propyl in Frage.

Als olefinische Comonomere kommen Ethylen, Propylen, Isopren, Isobutylen Butadien, Cyclohexadien, Cyclohexen. Cyclopeniadien, gegebenenfalls substituierte Norbornen, gegebenenfalls substituierte Dicyclopentadien, gegebenenfalls substituierte Tetracyclododecene, gegebenenfalls substituierte Dihydrocyclopentadiene,
$C_1$-$C_8$-, vorzugsweise $C_1$-$C_4$-Alkylester der (Meth)acrylsäure, vorzugsweise Methylund Ethylester,
$C_1$-$C_8$-, vorzugsweise $C_1$-$C_4$-Alkylether des Vinylalkohols, vorzugsweise Methyl und Ethylether,
$C_1$-$C_8$-, vorzugsweise $C_1$-$C_4$-Alkylester des Vinylalkohols, vorzugsweise der Ethansäure,
Derivate der Maleinsäure, vorzugsweise Maleinsäurcanhydrid. Derivate des Acrylnitrils, vorzugsweise Acrylnitril und Mcthacrylnitril in Frage.

Die aromatischen Polymere haben im allgemeinen Molekulargewichte Mw von 1000 bis 10 000 000, vorzugsweise von 60 000 bis 1 000 000, besonders bevorzugt 70 000 bis 600 000, bestimmt nach Lichtstreuung.

Die Polymere können eine lineare Kettenstruktur besitzen als auch durch Co-Einheiten Verzweigungsstellen aufweisen (z.B. Propfcopolymere). Die Verzweigungszentren beinhalten z.B. sternförmige Polymere oder andere geometrische Formen der primären, sekundären, tertiären, gegebenenfalls quartären Polymerstruktur.

Die Copolymere können sowohl statistisch, alternierend als auch als Blockcopolymere vorliegen.

Blockcopolymere beinhalten Di-Blöcke, Tri-Blöcke, Multi-Blöcke und sternförmige Biockcopolymere.

Die Ausgangspolymere sind allgemein bekannt (z.B. WO 94/21 694).

Als Lösungsmittel werden vorzugsweise Ether der Formel (I) eingesetzt:

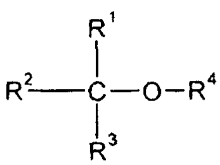

(I)

in welcher

> $R^1$, $R^2$, $R^3$ und $R^4$ unabhängig voneinander für $C_1$-$C_8$-Alkyl stehen, welches geradkettig oder verzweigt ist, oder für gegebenenfalls durch $C_1$-$C_4$-Alkyl substituicrtes $C_5$-$C_6$-Cycloalkyl oder
>
> zwei der Reste $R^1$, $R^2$, $R^3$ und $R^4$ einen Ring mit 3 bis 8, vorzugsweise 5 oder 6 Kohlenstoffatomen bilden.

Besonders bevorzugt sind Methyl-t-butylether, Ethyl-t-butylether, Propyl-t-butylether, Butyl-t-butylether, Methyl-(2-methyl-2-butyl)ether (tert. Amyl-methylether), 2-Ethoxy-2-methylbutan (Ethyl-tert.-amylether).

Die eingesetzte Menge des Katalysators hängt von dem ausgeführten Prozeß ab, dieser kann kontinuierlich, halb-kontinuierlich oder diskontinuierlich durchgeführt werden.

Die einzusetzende Menge an Katalysator ist beispielsweise in WO 96/34 896 beschrieben.

Die Polymerkonzentrationen, bezogen auf das Gesamtgewicht aus Lösungsmittel und Polymer betragen im allgemeinen 80 bis 1, vorzugsweise 50 bis 10, insbesondere 40 bis 15 Gew.-%.

Die Hydrierung der Ausgangspolymere wird nach allgemein bekannten Methoden durchgeführt (z.B. WO 94/21 694, WO 96/34 896, EP-A-322 731). Als Katalysatoren können eine Vielzahl von bekannten Hydrierkatalysatoren eingesetzt werden. Bevorzugte Metallkatalysatoren sind beispielsweise in WO 94/21 694 oder WO 96/34 896 genannt. Als Katalysator kann jeder für Hydricrreaktion bekannter Katalysator eingesetzt werden. Geeignet sind Katalysatoren mit großer Oberfläche (z.B. 100 bis 600 $m^2$/g) und kleinen mittleren Porendurchmesser (z.B. 20 bis 500 Ä). Weiterhin sind auch Katalysatoren mit kleiner Oberfläche (z.B. $\geq$10 $m^2$/g) und großen mittleren Porendurchmesser geeignet, deren Porengrößenverteilung dadurch charakterisiert ist, daß 98 % des Porenvolumens Poren mit Porendurchmessern größer 600 Å aufweisen (z.B. ca. 1 000 bis 4 000 Å) (vgl. z.B. US-A-5.654.253, US-A-5.612.422, JP-A-03 076 706). Insbesondere werden Raney-Nickel, Nickel auf Siliciumdioxid oder Siliciumdioxid/Aluminiumoxid, Nickel auf Kohlenstoff als Träger und/oder Edelmetallkatalysatoren, z.B. Pt, Ru, Rh, Pd, verwendet.

Die Reaktion wird im allgemeinen bei Temperaturen zwischen 0 und 500°C, vorzugsweise zwischen 20 und 250°C, insbesondere zwischen 60 und 200°C, durchgeführt.

Die für Hydrierreaktionen üblichen Lösungsmitteln verwendbaren Lösungsmitteln sind beispielsweise in DE-AS 1 131 885 beschrieben (siehe oben).

Die Reaktion wird im allgemeinen bei Drücken von 1 bar bis 1000 bar, vorzugsweise 20 bis 300 bar, insbesondere 40 bis 200 bar, durchgeführt.

## Beispiele:

Durch Lichtstreuung werden die absoluten Molgewichte $\overline{M}w$ (Gewichtsmittel) des Ausgangspolymers und des hydrierten Produktes bestimmt. Membranosmose liefert die absoluten Molekulargewichte $\overline{M}n$ (Zahlenmittel). In Beispiel 3 (Tabelle) entsprechen die relativen Werte der GPC-Messung gegenüber Polystyrolstandards den ermittelten absoluten Molekulargewichten des eingesetzten Polystyrols.

## Beispiele 1 bis 3

Ein 1L-Autoklave wird mit Inertgas gespült. Die Polymerlösung und der Katalysator werden zugegeben (Tabelle). Nach dem Verschließen wird mehrmals mit Schutzgas dann mit Wasserstoff beaufschlagt. Nach dem Entspannen wird der jeweilige Wasserstoffdruck eingestellt und der Ansatz unter Rühren auf die entsprechende keaktionstemperatur geheizt. Der Reaktionsdruck wird nach Einsetzen der Wasserstoffaufnahme konstant gehalten.

Die Reaktionszeit ist die Zeit vom Aufheizen des Ansatzes bis zur vollständigen Hydrierung des Polystyrols oder bei unvollständiger Hydrierung die Zeit bis die Wasserstoffaufnahme ihrem Sättigungswert zustrebt.

Nach beendeter Reaktion wird die Polymerlösung filtriert. Das Produkt wird in Methanol gefällt und getrocknet. Das isolierte Produkt zeigt die in der Tabelle aufgeführten physikalischen Eigenschaften.

**Tabelle**

Hydrierung von Polystyrol in Abhängigkeit des Lösungsmittelsystems und der Reaktionstemperatur

| Beispiel-Nr. | Polymer Masse g | Lösungsmittel ml | Katalysator Masse[3] g | Reaktions-Temperatur °C | $H_2$-Druck bar | Reaktionszeit h | Hydriergrad[1)] % | Tg (DSC) °C | $\bar{M}n$ $10^3$ g/mol | $\bar{M}w$ $10^3$ g/mol |
|---|---|---|---|---|---|---|---|---|---|---|
| 1 Vergleich | 100,2 [2)] | 300 CYH | 12,5 | 160 | 100 | 13 | 98,5 | 148 | 70,0 | 170,4 |
| 2 Vergleich | 100.2 [2)] | 300 CYH | 12.5 | 200 | 100 | 7 | 100 | 148 | 47,5 | 108,1 |
| 3 erfindungsgemäß | 100.2 [2)] | 200 CYH + 100 MTBE | 12.5 | 160 | 100 | 6 | 100 | 149 | 71,6 | 176.4 |

[1)] Ermittelt durch $^1$H-NMR Spektroskopie

[2)] Polystyrol Type 158 k. $\bar{M}w$ = 280.000 g/mol. BASF AG. Ludwigshafen. Deutschland

[3)] Aldrich $Ni/SiO_2/Al_2O_3$. 64 - 67 % Ni

CYH = Cyclohexan

MTBE = Methyl-tert.-butylether

Der Nickel-Katalysator (Tabelle) hydriert Polystyrol bei 160°C in ciner Reaktionszeit von 13 Stunden nicht vollständig (Vergleichsbeispiel 1). Im Vergleich dazu verläuft die Hydrierreaktion bei 200°C nach 7 h vollständig, jedoch unter drastischer Molekulargewichtsabnahme. Die Zugabe des Methyl-tert.-butylether führt zu einer Absenkung, der zur Hydrierung benötigten Reaktionstemperatur, bei ähnlicher Reaktionszeit als ohne Zugabe dieser Lösungsmittelkomponente bei 200°C (Verglcichsbeispiel 2), jedoch unter Erhalt der absoluten Molekulargewichte Mn und Mw im Vergleich zum Ausgangspolymer (Beispiel 3).

## Patentansprüche

1. Verfahren zur Hydrierung aromatischer Polymere, wobei als Lösungsmittel mindestens ein Ether, welcher kein $\alpha$-Wasserstoff-Atom an einem zur Etherfunktion benachbarten Kohlenstoffatom besitzt oder ein Gemisch dieses Ethers oder Mischungen dieser Ether mit für Hydrierreaktionen geeigneten Lösungsmitteln verwendet wird.

2. Verfahren gemäß Anspruch 1, wobei als Ether Verbindungen der Formel (1)

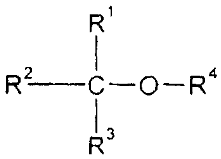

(I)

in welcher

$R^1$, $R^2$, $R^3$ und $R^4$ unabhängig voneinander für $C_1$-$C_8$-Alkyl stehen, welches geradkettig oder verzweigt ist, oder für gegebenenfalls durch $C_1$-$C_4$-Alkyl substituiertes $C_5$-$C_6$-Cycloalkyl oder

zwei der Reste $R^1$, $R^2$, $R^3$ und $R^4$ einen Ring mit 3 bis 8, vorzugsweise 5 oder 6 Kohlenstoffatomen bilden.

3. Verfahren gemäß Anspruch 1 und 2, wobei die aromatischen Polymere ausgewählt sind aus gegebenenfalls im Phenylring oder an der Vinylgruppe substituiertem Polystyrol oder Copolymere davon mit Monomeren, ausgewählt aus der Gruppe der Olefine, (Meth)Acrylate oder Gemische davon, ferner ausgewählt aus jeweils armatischen Polyethern, Polycarbonaten, Polyestern, Polyamiden, ferner ausgewählt aus Polyphenylen, Polyxylylene, Polyphenylenvinylene, Polyphenylenethylene, Polyphenylensulfide, Polyaryletherketone, Polysulfone, Polyethersulfone, Polyimide sowie deren Mischungen oder Copolymere davon, gegebenenfalls mit aliphatischen Verbindungen.

4. Verfahren gemäß Anspruch 1 bis 3, wobei die aromatischen Polymere ausgewählt sind aus gegebenenfalls im Phenylring oder an der Vinylgruppe substituiertem Polystyrol oder Copolymere davon mit Monomeren aus der Gruppe der Olefine, (Meth)Acrylate oder Gemische davon.

## Claims

1. Process for the hydrogenation of aromatic polymers, wherein at least one ether which has no $\alpha$-hydrogen atom on a carbon atom adjacent to the ether function, or a mixture of this ether or mixtures of these ethers with solvents suitable for hydrogenation reactions is used as the solvent.

2. Process according to claim 1, wherein compounds of the formula (I)

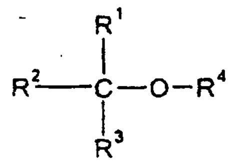

(I)

in which

$R^1$, $R^2$, $R^3$ and $R^4$ mutually independently denote $C_1$-$C_8$ alkyl, which is linear or branched, or $C_5$-$C_6$ cycloalkyl optionally substituted by $C_1$-$C_4$ alkyl or

two of the residues $R^1$, $R^2$, $R^3$ and $R^4$ form a ring having 3 to 8, preferably 5 or 6 carbon atoms

are used as the ether.

**3.** Process according to claim 1 and 2, wherein the aromatic polymers are selected from among polystyrene optionally substituted in the phenyl ring or on the vinyl group or copolymers thereof with monomers selected from the group of olefins, (meth)acrylates or mixtures thereof, moreover selected from among aromatic polyethers, polycarbonates, polyesters, polyamides, moreover selected from among polyphenylene, polyxylylenes, polyphenylenevinylenes, polyphenyleneethylenes, polyphenylene sulfides, polyaryl ether ketones, polysulfones, polyether sulfones, polyimides and the mixtures or copolymers thereof, optionally with aliphatic compounds.

**4.** Process according to claims 1 to 3, wherein the aromatic polymers are selected from among polystyrene optionally substituted in the phenyl ring or on the vinyl group or copolymers thereof with monomers from the group of olefins, (meth)acrylates or mixtures thereof.

## Revendications

**1.** Procédé d'hydrogénation de polymères aromatiques, dans lequel on utilise comme solvant au moins un éther, lequel ne possède aucun atome d'hydrogène-$\alpha$ sur un atome de carbone voisin de la fonction éther, ou un mélange de cet éther ou des mélanges de ces éthers avec des solvants appropriés pour les réactions d'hydrogénation.

**2.** Procédé selon la revendication 1, dans lequel on utilise comme éther des composés de formule (1)

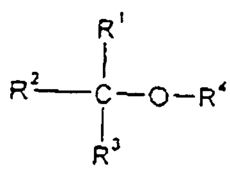

(I)

dans laquelle

$R^1$, $R^2$, $R^3$ et $R^4$ représentent indépendamment l'un de l'autre un alkyle en $C_1$-$C_8$, lequel est linéaire ou ramifié ou représentent un cycloalkyle en $C_5$-$C_6$ le cas échéant substitué par un ou plusieurs alkyle en $C_1$-$C_4$ ou deux des radicaux $R^1$, $R^2$, $R^3$ et $R^4$ forment un cycle avec 3 à 8, de préférence 5 ou 6 atomes de carbone.

**3.** Procédé selon la revendication 1 et 2, dans lequel les polymères aromatiques sont sélectionnés parmi le polystyrène le cas échéant substitué dans le cycle phényle ou sur le groupement vinyle ou les copolymères de celui-ci avec des monomères, sélectionnés parmi le groupe des oléfines, (méth)acrylates ou des mélanges de ceux-ci, sélectionnés en outre parmi respectivement les polyéthers aromatiques, les polycarbonates, les polyesters, polyamides, sélectionnés en outre parmi les polyphénylènes, polyxylylènes, polyphénylènevinylènes, polyphénylènéthylènes, sulfures de polyphénylène, polyaryléthercétones, polysulfones, polyéthersulfones, polyimides ainsi que leurs mélanges ou copolymères de ceux-ci, le cas échéant avec des composés aliphatiques.

4. Procédé selon la revendication 1 à 3, dans lequel les polymères aromatiques sont sélectionnés parmi le polystyrène substitué le cas échéant dans le cycle phényle ou sur le groupement vinyle ou les copolymères de ceux-ci avec des monomères du groupe des oléfines, (méth)acrylates ou des mélanges de ceux-ci.